# EUROPEAN PATENT SPECIFICATION

(11) **EP 1 659 357 B1**
(45) Date of publication and mention of the grant of the patent: **19.11.2008**
(21) Application number: 05022197.7
(22) Date of filing: 12.10.2005
(51) Int. Cl.: F28C 1/00, F28F 25/04, F24F 5/00, F28D 5/02

(54) **Cooling mat for auxiliary cooling device, and auxiliary cooling device using the same**
Kühlmatte für Hilfskühler und Hilfskühler selbige gebrauchend
Nappe de refroidissement pour un dispositif auxiliaire de refroidissement et dispositif auxiliaire de refroidissement avec une nappe de refroidissement

(30) Priority: 29.10.2004 JP 2004316918; 20.01.2005 JP 2005012879
(43) Date of publication of application: 24.05.2006
(73) Proprietor: Fujikoki Corporation, Tokyo (JP)
(72) Inventor: Nagashima, Syunichi, Setagaya-ku, Tokyo (JP); Yatagai, Hiroomi, Setagaya-ku, Tokyo (JP)
(74) Representative: TER MEER - STEINMEISTER & PARTNER GbR

(56) References cited:
- WO-A-03/091633
- DE-A1- 10 113 548
- DE-B- 1 100 053
- US-A- 3 265 550
- US-A- 4 031 180
- US-A- 4 933 117
- US-A- 4 994 211
- US-A- 5 130 063
- US-A- 5 755 867
- US-A- 5 971 370
- US-A- 6 102 994
- US-A1- 2002 136 885
- PATENT ABSTRACTS OF JAPAN vol. 2003, no. 12, 5 December 2003 (2003-12-05) & JP 2004 003806 A (FUJI KOKI CORP), 8 January 2004 (2004-01-08)

## Description

### BACKGROUND OF THE INTENTION

### Field on the invention

The present invention relates to a system comprising a condenser and an auxiliary cooling device for cooling intake air of a condenser, according to the preamble of claim 1.

### Description of the related art

An auxiliary cooling device of the above kind is described in the Japanese patent application laid-open publication 2004-003806, as will be explained below. Similar devices are disclosed by U.S.-A-4,994,211 and U.S.-A-5,971,370.

A condenser used in a refrigeration cycle of an air conditioner, a freezer or a refrigerator is heated by the heat generated when the refrigerant is liquefied, so the condenser must be equipped with a means for cooling the same. There are two methods for cooling the condenser, a water cooling system and an air cooling system. The water cooling system has high heat exchange efficiency, enabling a stable in-fridge or in-room temperature to be maintained during high temperature times such as summer, but the structure of the device is complex and the costs are high. The air cooling system, in which the cooling of the condenser is done by air, is inexpensive since it has a simple structure, but the cooling efficiency of the in-fridge or in-room temperature is deteriorated during high temperature times such as summer. Thus, there are many proposals to use an auxiliary cooling device for an air-cooled condenser, and one such typical device is disclosed for example in Japanese Patent Application Laid-Open Publication No. 10-213361, which teaches an auxiliary cooling device that improves cooling efficiency by spraying water directly onto the heat radiation fin.

A known water-spray-type auxiliary cooling device comprises one or more spray nozzle units for spraying very fine drops of water or mist-like water substantially uniformly to the heat radiation fin of the condenser of an outdoor unit of an air conditioner, and a control unit for activating and stopping the nozzles, wherein when the outside temperature exceeds a high temperature (such as 35 °C) when the compressor is in operation, water is sprayed onto the heated radiation fin while adjusting the amount of water so that no excessive drain water is output from the spray nozzles, thereby cooling the radiation fin disposed on the refrigerant pipe by the latent heat of vaporization of the sprayed water. The spray nozzle is supported by a protection frame, and supplied with cooling water via a water supply pipe. This type of auxiliary cooling device is operated as a conventional air cooling device during seasons other than summer, and after a long period of continued operation, scales are deposited on the surface of the heat radiation fin, by which the heat exchange efficiency during air cooling operation is deteriorated or the corrosion of the heat radiation fin occurs.

The present applicant has proposed one example of an auxiliary cooling device to be used in an air-cooled condenser, wherein a cooling mat is disposed near the radiation fin of the condenser, and cooling water is run down the cooling mat to cool the intake air of the condenser (refer to Japanese Patent Application Laid-Open Publication No. 2004-3806).

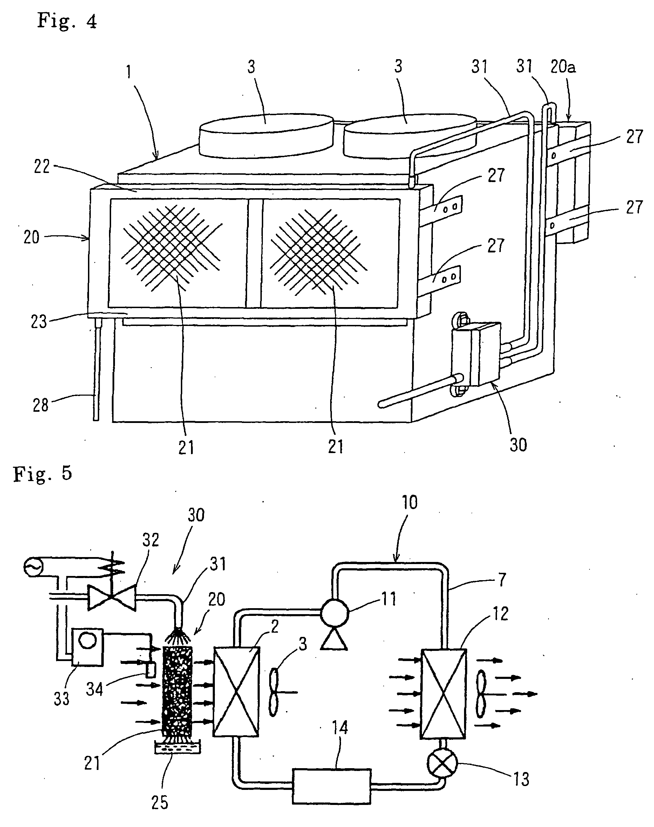

FIG. 5 is a schematic view showing one example of the prior-art refrigeration cycle. The refrigeration cycle comprises a compressor 11, a condenser 2, a drier 14, an expansion valve 13 and an evaporator 12 that are connected via a refrigeration pipe 7 to constitute a refrigeration cycle 10. Close to the condenser constituting the conventionally well-known refrigeration cycle (not shown), at a predetermined distance from a cooling fan 3 disposed in the condenser 2, is disposed an auxiliary cooling device 20. The auxiliary cooling device 20 is equipped with a cooling mat 21, a water tank 25 for storing the cooling water, and a water supply unit 30 for supplying cooling water to the water supply pipe 31. The cooling mat 21 is disposed so as to prevent the cooling water from splashing during its fall, and from being flown by the air being taken into the cooling fan 3.

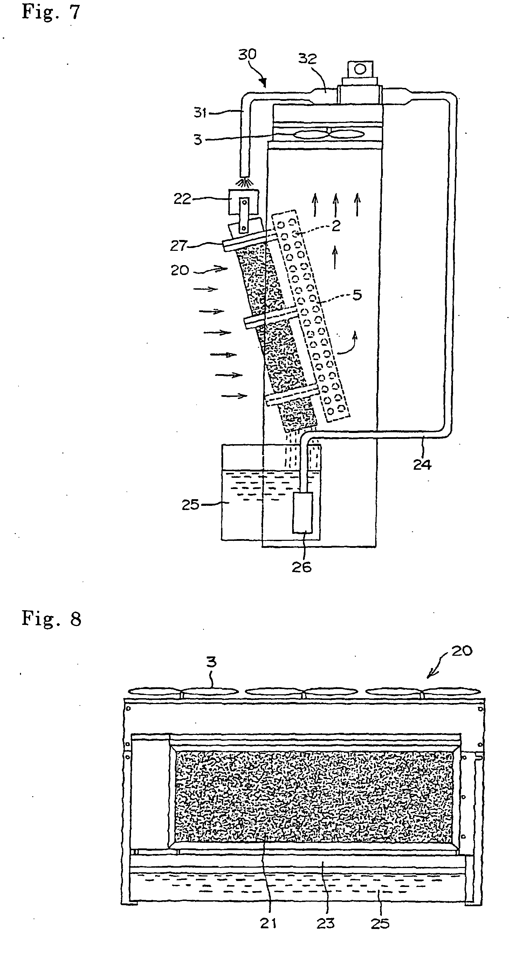

As shown in FIGS. 7 and 8, the auxiliary cooling device 20 according to the above-mentioned proposal is supported via a supporting unit 27 on the condenser 2, wherein the cooling mat 21 is disposed at a predetermined distance away from the radiation fin of the condenser 2, and comprises a water spray trough 22 for spraying cooling water from the water supply unit 30 to the cooling mat 21, a drain trough 23 for receiving the cooling water dripping from the cooling mat 21 disposed at a lower portion of the cooling mat 21, a water tank 25 for collecting the cooling water from the drain trough 23, a pump 26 and a recycling pipe 24 disposed between the drain trough 22 and the water tank 25 for recycling the cooling water in the water tank 25 to the water supply pipe 31. The cooling water sprayed from the upper portion onto the cooling mat 21 is retained in the cooling mat 21 to cool the intake air of the condenser 2 passing through the cooling mat 21.

In the auxiliary cooling device 20, the water supply device 30 comprises, for example, a water supply pipe 31 communicated to a water pipe, a solenoid valve 32 provided on the water supply pipe 31 for communicating or stopping the water, a thermostat 33 for controlling the opening and closing of the solenoid valve 32, and a sensor 34 for sensing the temperature of air being taken into the auxiliary cooling device 20 for activating the thermostat 33.

The auxiliary cooling device 20 does not directly spray cooling water onto the heat radiation fin of the condenser, but cools the air cooling the heat radiation fin of the condenser by the cooling water. In other words, the cooling ability of the device is enhanced by using cooling water to indirectly cool the condenser. By adopting an indirect cooling system, a superior effect is achieved in that the cooling water does not cause the heat radiation fin to be corroded or cause deposition of scales thereto. Further, since this auxiliary cooling device can be added to the conventional condenser, it can be attached to an existing unit, and it can be easily removed and cleaned. Moreover, since the coolingmat can be formed of recycledmaterial, it contributes to the efficient utilization of resource.

FIG. 4 is a view showing one example of a conventional method for fixing the auxiliary cooling device to an outdoor unit. The same elements as shown in other figures are denoted with the same reference numbers, and detailed explanations thereof are omitted.

The cooling mat 21 is disposed to prevent cooling water from splashing during fall or to be flown by the air being taken into the cooling fan 3, and the material used for the cooling mat 21 should preferably have small resistance for air to pass through, enable smooth heat exchange with the running cooling water, and have durability. In order for the mat to have a property to let air pass easily therethrough, it is preferable to form the mat from a nonwoven fiber body, preferably using recycled plastic reprocessed into fiber from the viewpoint of utilizing resource. It is preferable that the cooling mat 21 is shaped to substantially cover the air intake surface of the condenser 2, and the thickness of the cooling mat should be approximately a few centimeters, depending on the material and shape thereof. The installation of the cooling mat 21 can be facilitated by selecting a stretchable material. Further, the cooling mat 21 is attached to the condenser 2 via a supporting unit 27 (refer to FIG. 4).

The cooling water from the water spray trough 22 runs down along the cooling mat 21 in the form of a water screen, and cools the air passing through toward the condenser 2. The water spray trough 22 is for uniformly spraying the cooling water supplied from the water supply pipe 31 of the water supply device 30 to the upper portion of the cooling mat 21, and has multiple water spray holes formed on the bottom thereto for allowing cooling water to be discharged through the holes in a uniform manner. The cooling water having cooled the intake air to the condenser 2 and dripping from the lower portion of the cooling mat 21 is received and collected via the drain trough 23.

According to this arrangement, when the sensor 34 senses that the temperature of the intake air exceeds or falls below a predetermined value, a thermostat 33 is activated to open/close the solenoid valve 32. When the solenoid valve 32 is opened, tap water is supplied to the cooling mat 21 via the water supply pipe 31. As for drainage, the drain water is discharged via the drain pipe 28 connected to one end of the drain trough 23 (refer to FIG. 5) to the water tank 25, or directly drained to the ground. The cooling water is recycled in this manner by cooling the air taken into the condenser 2.

The refrigeration cycle 10 in the present description includes a single condenser 2, but it is possible to have two condensers disposed in mirror symmetry, in which case there are two auxiliary cooling devices 20 and 20a that are disposed on the air intake side of each condenser. Further, it is possible to arrange a plurality of sets in parallel each comprising a condenser 2 and an auxiliary cooling device 20. Moreover, according to the above-mentioned embodiment, the water spray trough 22 as water spray means is disposed on the upper portion of the cooling mat 21, but it is possible to have the water spray pipe disposed within the cooling mat 21 to simplify the overall structure of the device. Furthermore, the cooling mat 21 can be formed of material other than fiber, as long as it enables cooling water to fall along the surface, such as a foamed synthetic resin member.

It is possible to use drain water generated in the evaporator 12 instead of tap water for the cooling water. In other words, the drain water can be supplied from the drain pan via a pump to the water tank. The cooling water in the water tank 25 can be supplied using a pump via a recycling pipe into the water supply device 30 and through the water spray trough 31, used for cooling, and then collected again in the drain trough 22 and into the water tank 25. The water spray trough 22 and the drain trough 23 can each be a water spray pipe and a drain pipe. By putting a Legionella bacteria elimination agent in the water tank 25, it is possible to improve the sanitary environment of the device. The bacteria elimination agent should be replaced approximately once a month to maintain a preferable environmental condition. Further, it is possible to constantly monitor the water temperature of the water tank 25 using a sensor (not shown) so as to discharge the cooling water in the water tank 25 when the temperature exceeds a predetermined temperature and to supply new water such as tap water into the water tank 25. Moreover, it is possible to discharge the cooling water in the water tank 25 once a day so as to maintain the above-mentioned environmental condition. Thus, in an indirect auxiliary cooling device using a cooling mat, the cooling mat is disposed at a predetermined distance from the heat radiation fin to infallibly shut down the unnecessary effect that the cooling water provides to the radiation fin (such as collision and deposition of scale), and since the cooling mat is provided with a water spray means on the upper portion thereof, a drainage means on the lower portion thereof and a recycling pipe for recycling the cooling water disposed between the drainage means and the water spray means, the cooling mat allows water to be smoothly fed thereto and drained therefrom, and enables efficient use of cooling water.

Since the auxiliary cooling device 20 enables to enhance the ability to cool the object device or condenser 2, and since it adopts an indirect-type cooling mechanism, it is capable of preventing collision and deposition of scales of the heat radiation fin by cooling water, and capable of being adopted easily to the conventional condenser 2 by mounting onto an existing unit, and even further, capable of being removed and cleaned easily. Moreover, by using a recycled material to form the cooling mat, the device enables efficient use of resource.

However, in a heat exchange means used in an air conditioner, a freezer or a refrigerator, during summer when the outside temperature is high, the cooling water is supplied constantly to wet the mat, and further when the auxiliary cooling device is disposed on an outdoor unit, it is exposed to rain and wind, so the mat is constantly in a wet condition. In a humid, high-temperature environment, fungus may occur on the cooling mat. Moreover, when the mat is exposed to outside air, dusts can be adhered to and deposited on the cooling mat. Such heat exchange device is usedmainly in large-scale shops and buildings, and located near spaces where many people pass by. Therefore, if dust is deposited or fungus is generated on the cooling mat, the dust or spores of fungus are mixed into the cooled air taken into the heat radiation unit, and dispersed to the surrounding environment via the hear radiation fan, which is a problem that must be solved from the viewpoint of sanitary supervision.

### SUMMARY OF THE INVENTION

The present invention aims at providing an auxiliary cooling device for cooling air that is capable of enhancing the cooling efficiency of an air-cooled condenser or object to be cooled during high-temperature times such as summer and capable of operating as a conventional air-cooled device during other times, capable of preventing scales from depositing on the heat radiation fin, capable of preventing collision of the heat radiation fin and deterioration of the heat exchange efficiency during air-cooled operation, and capable of enhancing the utilization efficiency the cooling mat. Furthermore, the present invention aims at providing an energy saving effect by enhancing the cooling effect.

In order to achieve the above object, the auxiliary cooling device according to the present invention comprises the features of claim I.

The auxiliary cooling device for cooling air used in an air conditioner, a freezer or a refrigerator according to the present invention adopts the following means. The present invention provides an auxiliary cooling device for cooling intake air of a means to be cooled by disposing near a heat radiation fin of the means to be cooled a cooling mat formed by entwining fiber into a mat and having cooling water run down the cooling mat, further comprising a water spray trough with an opened bottom positioned on an upper portion of the cooling mat; and a water supply pipe having a plurality of cooling water outlets disposed inside the water spray through, wherein the cooling water outlets are positioned close enough to an inner wall surface of the water spray trough so that the cooling water output from the cooling water outlets collides against the inner wall surface and splashes in various directions.

Further according to the auxiliary cooling device for cooling air, the plurality of cooling water outlets can be opened substantially horizontally and facing a direction parallel to the direction against which the air to be cooled is taken in. Moreover, according to the auxiliary cooling device for cooling air, the cooling mat can be placed at a predetermined distance away from the heat radiation fin of the means to be cooled. Even further, the auxiliary cooling device for cooling air can further comprise a drain trough disposed on a lower portion of the cooling mat and a recycling means for recycling water disposed between the drain trough and the water spray trough.

According to the above arrangements, the present invention provides an auxiliary cooling device for cooling air for cooling the condenser or object to be cooled, wherein a cooling mat is disposed near the heat radiation fin of the condenser, and water is run uniformly down the cooling air intake side of the cooling mat so as to cool the intake air to the condenser, thereby improving the condensing ability of the condenser. Moreover, since the present invention adopts an indirect cooling system, it solves the problem of collision and deposition of scales on the heat radiation fin by the cooling water. Further, since the present auxiliary cooling device for cooling air can be disposed on a conventional condenser, it can be additionally attached to an existing unit, and the removal and cleaning thereof is facilitated. By utilizing a recycled material to form the cooling mat, it contributes to effective use of resource.

### BRIEF DESCRIPTION OF THE DRAWINGS

FIG. 1 is a cross-sectional view showing the structure of an auxiliary cooling device for cooling air according to the present invention;
FIG. 2 is a cross-sectional view showing the structure of a relevant portion of the auxiliary cooling device for cooling air according to the present invention;
FIG. 3 is an upper view showing the structure of the relevant portion of the auxiliary cooling device for cooling air shown in FIG. 1, wherein the lid of the water spray trough is taken away;
FIG. 4 is a perspective view showing an example of an outdoor unit incorporating the auxiliary cooling device for cooling air;
FIG. 5 is an explanatory view of a refrigeration cycle incorporating the auxiliary cooling device for cooling air;
FIG. 6 is an explanatory view illustrating the feeding of cooling water and the energy saving effect of the auxiliary cooling device for cooling air according to the present invention;
FIG. 7 is a cross-sectional view showing the structure of the auxiliary cooling device for cooling air according to a prior patent application; and
FIG. 8 is a front view showing the schematic structure of a relevant portion of the auxiliary cooling device for cooling air according to FIG. 7.

### DETAILED DESCRIPTION OF THE PREFERRED EMBODIMENTS

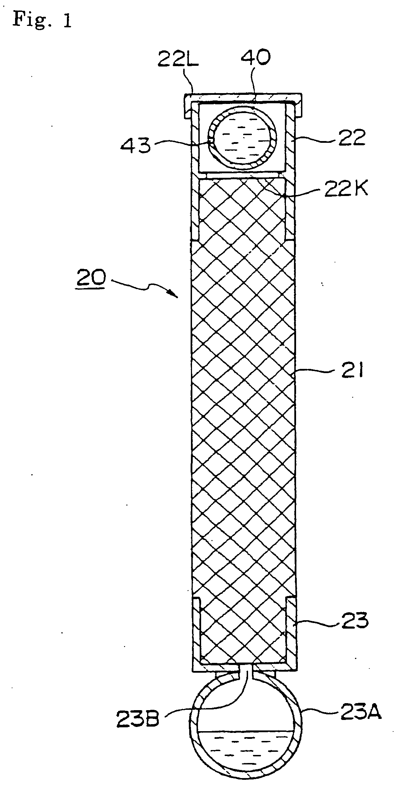

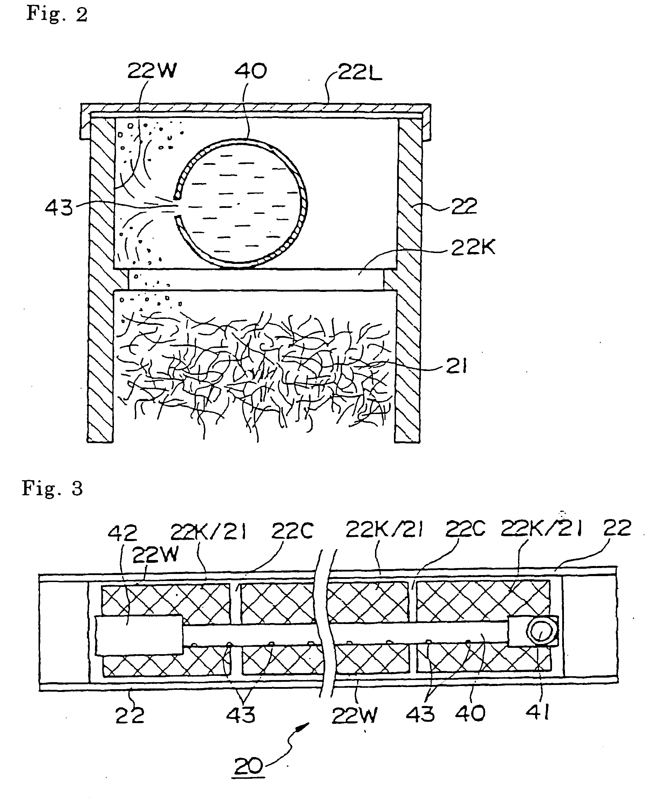

The preferred embodiment for carrying out the present invention will be described with reference to FIGS. 1 through 4.

In FIGS. 1 through 3, an auxiliary cooling device 20 for cooling air comprises a cooling mat 21, a water spray trough 22 for spraying cooling water to the cooling mat 21 from above, and a drain trough 23 for receiving the cooling water dripping from the cooling mat 21. The water spray trough 22 is formed for example as a frame body having openings at upper and lower faces thereof, with its upper opening covered with a water spray trough lid 22L. The left and right walls of the water spray trough 22 are connected via beams 22C. The upper portion of the cooling mat 21 is supported via a lower opening 22K of the water spray trough 22, and the lower portion of the cooling mat 21 is supported via an upper opening of the drain trough 23. A drain slot 23B is formed to the bottom surface of the drain trough 23, and the cooling water from the cooling mat 21 is discharged through the drain slot 23B to a drain pipe 23A. The cooling water from the drain trough 23 can be discharged directly onto the ground etc. or can be stored in a water tank 25 to be recycled to the water supply pipe via a pump.

A water supply pipe 40 having on one end a water supply port 41 and on the other end a blank cap 42 is disposed in the water spray trough 22 horizontally and in parallel with the walls of the water spray trough. Multiple cooling water outlets 43 through which cooling water is output are provided on the water supply pipe 40. The cooling water outlets 43 are opened toward an inner wall surface 22W of one wall of the water spray trough 22. The cooling water outlets 43 are disposed close enough to the inner wall surface 22W so that the cooling water discharged through the cooling water outlets 43 toward the inner wall surface 22W collides against the inner wall surface 22W of the water spray trough 22 and splashes in various directions. The cooling water supplied to the water supply pipe 40 is discharged through the cooling water outlets 43 substantially horizontally toward the inner wall 22W, collides against the inner wall surface 22W and splashes in various directions, becoming minute water drops and passes through the lower opening 22K of the water spray trough 22 to be supplied to the upper end portion of the cooling mat 21. By disposing the water supply pipe 40 close to the wall surface 22W positioned at the side from which cooling air passing the cooling mat enters, the cooling water is biased at the opening 22K to flow down from the side of the cooling mat through which the cooling air enters. Thus, the cooling air passing through the cooling mat 21 is efficiently cooled by vaporization heat, so only a small amount of cooling water is supplied to the side of the cooling mat 21 from which the cooling water is taken in, and thus, the present embodiment enables to prevent water drops of cooling water from splashing toward the condenser 2.

The cooling mat 21 should be desirably shaped to substantially cover the air intake surface of the condenser 2, and the thickness thereof should be approximately a few centimeters, depending on the material and shape of the mat. The installation of the coolingmat 21 is facilitated by selecting a stretchable material.

As for the properties of the material of the cooling mat 21, as described above, the material should preferably have small resistance when air is passed through, and at the same time, enable heat exchange to be performed smoothly with the falling cooling water, and have durability, like a nonwoven fiber body or a material formed by recycling used plastic and reprocessing the same into fibers and then entwining the same to form a mat, which is desirable from the viewpoint of efficient use of resource.

The cooling mat 21 can adopt material other than fiber material, such as foamed synthetic resin material, as long as it enables cooling water to fall down along the surface thereof. The cooling mat 21 formed of fiber material exerts an enhanced cooling effect, since the surfaces of the fibers are wetted by the cooling water and the spaces formed between the entwined fibers hold the cooling water, increasing the area in which the cooling air contacts the cooling water.

The fibers of the cooling mat 21 are coated with at least an antibacterial agent or an antifouling agent. By coating as an antifouling agent a metal oxide having catalytic action, such as titanium oxide (TiO₂), via spraying or the like, the hydrophilic property and thus the water retention ability of the mat is enhanced, and as a result, the dirt adhered to the cooling mat 21 can be easily removed and will not be deposited. If titanium oxide is used as the metal oxide, since titanium oxide is a photocatalytic substance that exerts catalytic action by being exposed to light, it can decompose the organic matter and other contaminants attached to the cooling mat 21, and it can even sterilize and decompose bacteria and fungus. Titanium oxide also has hydrophilic property to enable the dust to be washed away by surface moist, exerting a cleaning function to maintain the coated surface clean, so it enables the cleaning of the cooling mat 21 to be omitted or the cleaning interval thereof to be extended. The metal oxide can either be coated to the fiber material or can be applied by spraying or the like to the material already formed into a mat.

A substance containing metal emitting bactericidal ions can be used as the antibacterial agent. Silver and copper are examples of metal that emits bactericidal ions, which are available at a relatively low cost. If the cooling mat 21 is coated with antibacterial agent, the spores of bacteria and fungus adhered to the cooling mat 21 can be sterilized and destroyed, by which the bacteria and fungus are prevented from propagating on the cooling mat 21.

Only one of or both the antibacterial agent and the antifouling agent can be applied depending on the environment in which the mat is used, and by applying both the antibacterial agent and the antifouling agent as coating, both functions can be exerted.

The antibacterial and antifouling agents can be coated to the fibers prior to forming the mat, but from the viewpoint of cost and mass production, they should preferably be coated after the fibers are formed into a mat. That is, the coating of the agents can be performed by preparing a liquid coating agent in advance by adding a binder to the antibacterial agent or the antifouling agent, then applying the liquid coating agent to the mat using a brush or a spray, or storing the liquid coating agent in a tank and dipping the mat therein.

As illustrated in FIG. 4, the auxiliary cooling device 20 for cooling air comprises the above-described cooling mat 21 for the auxiliary cooling device, a frame for supporting the cooling mat 21, a water spray trough 22 for spraying cooling water to the cooling mat 21 from above, and a drain trough 23 for receiving the cooling water dripping from the cooling mat 21, which can be applied by installing near a heat radiation unit of a heat exchanger. By using a frame to support the above-described cooling mat 21 for the auxiliary cooling device, the portions of the cooling mat not covered by the frame can let air pass through, and by positioning the auxiliary cooling device 20 near the heat radiation unit of a heat exchanger, the water falling along the fibers cools the intake air that passes through the mat and enhances the cooling efficiency of the heat radiation unit. The cooling mat 21 for the auxiliary cooling device has a self-cleaning function against bacteria, fungus and dust due to the coating applied thereto, so that when the auxiliary cooling device 20 is disposed on an outdoor unit or the like, there is no need to remove the auxiliary cooling unit from the outdoor unit to especially clean or maintain the device, and the auxiliary cooling device 20 can maintain a sanitary condition at low cost for a long period of time without removing from the outdoor unit or the like.

According to the present embodiment, the cooling water from the water spray trough 22 falls down along the cooling mat 21 in a plane and cools the air passing through the mat toward the condenser 2. The portion of the cooling water used to cool the intake air to the condenser 2 that did not evaporate and reached the lower end of the cooling mat 21 is collected via the drain trough 23 into the water tank 25. The cooling water in the water tank 25 is sent via a pump 26 to a recycling water pipe 24 to a water supply device 30 and supplied to a water supply pipe 31, used for cooling in the same manner as described above, then flows via the drain trough 23 into the water tank 25 again. The cooling water is recycled in this manner while cooling the air flowing toward the condenser 2. The water spray trough 22 and the drain trough 23 can each be a water spray pipe and a drain pipe.

The water spray trough 22 is designed to uniformly spray the cooling water supplied through the water supply pipe 31 of the water supply device 30 to the upper portion of the cooling mat 21 on the direction parallel to the direction against which the air to be cooled is taken in. The drain trough 23 is a trough for receiving the cooling water dripping from the lower portion of the cooling mat 21, and the end thereof is connected to a water tank 25. By feeding a Legionella bacteria elimination agent (such as "KURISAWA PAKKU GR" which is a name of a product by Kurita Water Industries Ltd.) to the water tank 25, the sanitary environment can be improved. Further, by replacing the bacteria elimination agent once a month, the preferable environmental condition can be maintained.

The water temperature of the water tank 25 can be monitored continuously by a sensor (not shown), so that when the temperature exceeds a predetermined value, the cooling water in the water tank 25 can be discharged and new water (such as tap water) can be fed into the water tank 25. Further, the cooling water of the water tank 2 5 can be discharged regularly once a day to maintain the above environmental status.

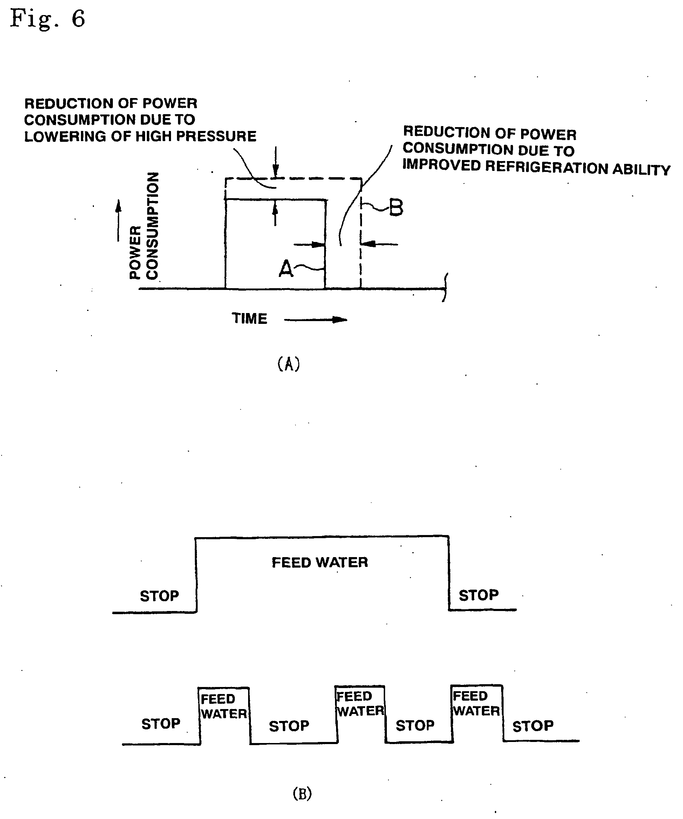

The enhancement of the cooling effect for cooling air according to the auxiliary cooling device and the effect for reducing power consumption according to the present invention will now be described with reference to FIG. 6 (A) . FIG. 6 (A) is a chart for explaining the operation behavior of a compressor in the refrigeration cycle, wherein the vertical axis shows the power consumption for operating the compressor and the horizontal axis shows the operation time of the compressor. The solid line shows an example in which the auxiliary cooling device for cooling air according to the present invention is installed on one side of the heat radiation fin of the cooling means from which air is taken in, and the dashed line shows an example in which the auxiliary cooling device for cooling air according to the present invention is not installed. According to the present invention, high pressure is reduced, by which the cooling ability (refrigeration ability) is improved and the power consumption reduced, contributing to saving energy.

In order to cut down the amount of cooling water without deteriorating the effect of cooling air, instead of continuously supplying water as shown in the upper chart of FIG. 6 (B), water can be supplied intermittently as shown in the lower chart of FIG. 6 (B) in which water is supplied and stopped with an interval of a few seconds to several tens of seconds.

## Claims

1. A system comprising a condenser and an auxiliary cooling device (20) for cooling intake air of a condenser (2) by disposing said device near a heat radiation fin of the condenser (2) said device having a cooling mat (21) formed by entwining fiber into a mat and having cooling water run down the cooling mat (21) for the intake air to be heat exchanged with the cooling water, wherein a water spray trough (22) with an opened bottom is positioned on an upper portion of the cooling mat (21). **characterized in that** a water supply pipe (40) having a plurality of cooling water outlets (43) is disposed inside the water spray trough (22), wherein the cooling water outlets (43) are positioned at a close distance to and opened toward an inner wall surface (22W) of the water spray trough (22) in a direction parallel and counter to the direction in which the air to be cooled is taken in.

2. The system according to claims 1, wherein the cooling mat (21) is placed at a predetermined distance away from the heat radiation fin of the condenser (2).

3. The system according to any one of claims 1 and 2. wherein the water is supplied intermittently with an interval of a few seconds to several tens of seconds so as to reduce the amount of water being used.

4. The system according to any one of claims 1 to 3, wherein a metal oxide is applied on a surface of the cooling mat for the purpose of retaining water so as to improve cooling efficiency.

5. The system according to any one of claims 1 to 4, further comprising a drain trough disposed on a lower portion of the cooling mat and a recycling means for recycling water disposed between the drain trough and the water spray trough so as to reduce the amount of water being used.

## Patentansprüche

1. System, umfassend einen Kondensator und eine Hilfskühlvorrichtung (20) zum Kühlen der Einlassluft eines Kondensators (2) durch Anordnung der Vorrichtung in der Nähe einer Hitzeabstrahlungsrippe des Kondensators (2), welche Vorrichtung ein Kühlmatte (21) umfasst, die gebildet wird durch Einflechten von Fasern in eine Matte, und durch Laufenlassen von Wasser durch die Kühlmatte (21), so dass die Einlassluft des Wärmetauschers mit dem Kühlwasser in einen Wärmeaustausch gerät, wobei ein Spritzwassertrog (22) mit einem geöffneten Boden auf einem oberen Bereich der Kühlmatte (21) angeordnet ist, **dadurch gekennzeichnet, dass** eine Wasserleitung (40) mit einer Anzahl von Kühlwasserauslässen (43) innerhalb des Spritzwassertrogs (22) angeordnet ist, welche Kühlwasserauslässe (43) in nahem Abstand zu einer Innenwandoberfläche (22W) des Spritzwassertrogs (22) angeordnet und zu dieser geöffnet sind, in einer Richtung parallel und entgegengesetzt zur Richtung, in der die zu kühlende Luft eingelassen werden soll.

2. System gemäß Anspruch 1, bei welchem die Kühlmatte (21) in einem vorbestimmten Abstand von der Hitzestrahlungsrippe des Kondensators (2) angeordnet ist.

3. System gemäß einem der Ansprüche 1 und 2, bei welchem das Wasser intermittierend in einem Intervall von einigen Sekunden bis einigen zehn Sekunden eingelassen wird, um den Wasserverbrauch zu senken.

4. System gemäß einem der Ansprüche 1 bis 3, bei welchem ein Metalloxid auf einer Oberfläche der Kühlmatte zum Rückhalten von Wasser vorgesehen ist, um die Kühleffizienz zu verbessern.

5. System gemäß einem der Ansprüche 1 bis 4, ferner umfassend eine Ablaufwanne auf einem unteren Bereich der Kühlmatte und ein Rückgewinnungsmittel zur Rückgewinnung von Wasser, das zwischen der Ablaufwanne und der Spritzwasserwanne angeordnet ist, um den Wasserverbrauch zu senken.

## Revendications

1. Système comprenant un condenseur et un dispositif de refroidissement auxiliaire (20) pour refroidir l'air d'admission d'un condenseur (2) en disposant ledit dispositif à proximité d'une ailette de rayonnement de chaleur du condenseur (2), ledit dispositif comportant un mat de refroidissement (21) formé en entrelaçant des fibres en un mat et en faisant s'écouler de l'eau de refroidissement le long du mat de refroidissement (21) pour que l'air d'admission échange de la chaleur avec l'eau de refroidissement, dans lequel un bac de pulvérisation d'eau (22) avec un fond ouvert est positionné sur une partie supérieure du mat de refroidissement (21), **caractérisé en ce qu'**un tuyau d'alimentation en eau (40) comportant une pluralité de sorties d'eau de refroidissement (43) est disposé à l'intérieur du bac de pulvérisation d'eau (22), dans lequel les sorties d'eau de refroidissement (43) sont positionnées à une courte distance d'une surface de paroi intérieure (22W) du bac de pulvérisation d'eau (22) et ouvertes vers celle-ci dans une direction parallèle et inverse de la direction dans laquelle l'air à refroidir est admis.

2. Système selon la revendication 1, dans lequel le mat de refroidissement (21) est placé à une distance prédéterminée de l'ailette de rayonnement de chaleur du condenseur (2).

3. Système selon l'une quelconque des revendications 1 et 2, dans lequel l'eau est délivrée de manière intermittente avec un intervalle de quelques secondes à plusieurs dizaines de secondes de manière à réduire la quantité d'eau utilisée.

4. Système selon l'une quelconque des revendications 1 à 3, dans lequel un oxyde métallique est appliqué à une surface du mat de refroidissement en vue de retenir l'eau de manière à améliorer le rendement de refroidissement.

5. Système selon l'une quelconque des revendications 1 à 4, comprenant en outre un bac d'évacuation disposé sur une partie inférieure du mat de refroidissement et des moyens de recyclage pour recycler l'eau disposés entre le bac d'évacuation et le bac de pulvérisation d'eau de manière à réduire la quantité d'eau utilisée.
